# EUROPÄISCHE PATENTSCHRIFT

(11) **EP 1 285 501 B1**
(45) Veröffentlichungstag und Bekanntmachung des Hinweises auf die Patenterteilung: **03.03.2004**
(21) Anmeldenummer: 00926631.3
(22) Anmeldetag: 30.05.2000
(51) Int. Cl.: H04B 3/56

(54) **KOPPELVORRICHTUNG**
COUPLING DEVICE
DISPOSITIF DE COUPLAGE

(43) Veröffentlichungstag der Anmeldung: 26.02.2003
(73) Patentinhaber: Ascom Powerline Communications AG, 3000 Bern 14 (CH)
(72) Erfinder: MUELLER, Kurt, CH-8610 Uster (CH)
(74) Vertreter: Roshardt, Werner Alfred, Dipl.-Phys.
(86) Internationale Anmeldenummer: PCT/CH2000/000304
(87) Internationale Veröffentlichungsnummer: WO 2001/093451

(56) Entgegenhaltungen:
- EP-A- 0 477 660
- EP-A- 0 981 188
- US-A- 5 115 368

## Beschreibung

### Technisches Gebiet

Die Erfindung betrifft eine Koppelvorrichtung mit einem Netzanschluss zum Anschliessen an ein Niederspannungs-Stromversorgungsnetz und mit einem Geräteanschluss zum Anschliessen eines Gerätes zum Senden und/oder Empfangen eines HF-Signals.

### Stand der Technik

Die elektronische Kommunikation, d.h. die Übertragung von Daten in elektronischer Form, gewinnt zunehmend an Bedeutung. Sei es, um einem Bankfachmann die aktuellsten Börsendaten direkt auf seinen Schreibtisch zu liefern oder bereits auf dem Rückweg aus dem Winterurlaub ferngesteuert die Heizung zu Hause einzuschalten. Die Generierung und Verarbeitung der entsprechenden Daten erfolgt zumeist in Datenendgeräten wie beispielsweise Computern, welche zwecks Energieversorgung an das Stromversorgungsnetz angeschlossen sind.

Ein möglicher Transportweg für solche Daten ist das Stromversorgungsnetz selber. Zu diesem Zweck werden die Nachrichten codiert und einem hochfrequenten Trägersignal in bekannter Weise, z. B. durch Frequenzmodulation aufgeprägt. Das modulierte Trägersignal wird vom jeweiligen Sender in das Niederspannungs-Stromversorgungsnetz eingekoppelt und vom jeweiligen Empfänger in gleicher Weise wieder ausgekoppelt, demoduliert und decodiert.

Zur Modulation bzw. Demodulation der Signale werden spezielle Modems benutzt, welche zwischen ein entsprechendes Datenendgerät und das Stromversorgungsnetz geschaltet werden. Ein solches Modem benötigt zwei Verbindungen zum Stromversorgungsnetz, eine Verbindung zur Versorgung des Modems mit elektrischer Energie und eine zweite Verbindung zum Ein- bzw. Auskoppeln des modulierten Hochfrequenzsignals (HF-Signal).

Es sind verschiedene Arten bekannt, wie ein solches Modem an ein Niederspannungs-Stromversorgungsnetz angeschlossen werden kann. Eine Möglichkeit besteht darin, die Netzspeisung und das HF-Signal getrennt, d.h. mit zwei verschiedenen Kabeln in das Modem zu führen, wobei für das Ein- bzw. Auskoppeln des HF-Signals ein Koppler benötigt wird, der einerseits mit dem Niederspannungs-Stromversorgungsnetz und andererseits über ein Signalkabel mit dem Modem verbunden ist. Die Speisung des Modems erfolgt mit einem handelsüblichen Netzkabel oder einem Steckernetzteil. Für diese Variante werden jedoch zwei Kabel und ein zusätzlicher Koppler benötigt, was einen grossen kostenmässigen Aufwand und einen erhöhten Platzbedarf nach sich zieht.

Eine weitere Möglichkeit zum Anschliessen des Modems besteht darin, die Netzspeisung und das HF-Signal simultan über ein handelsübliches Netzkabel in das Modem zu führen. Bei dieser Variante ist der Koppler zum Ein- bzw. Auskoppeln des HF-Signals direkt ins Modem integriert.

Diese Variante hat jedoch den Nachteil, dass die Niederspannung direkt ins Modem geführt wird, was nicht nur ein grösseres Gerät sondern auch einen erhöhten Aufwand bei der Isolation und bei Sicherheitsprüfungen und damit höhere Kosten bedeutet. Bei Geräten dieser Art sind häufig auch länderspezifische Anpassungen erforderlich, was ebenfalls zu erhöhten Produktions- und Logistikkosten führt.

### Darstellung der Erfindung

Aufgabe der Erfindung ist es, eine Vorrichtung der oben erwähnten Art anzugeben, welche kostengünstig und kompakt realisierbar ist.

Die Lösung der Aufgabe ist durch die Merkmale des Anspruchs 1 definiert. Gemäss der Erfindung verfügt eine entsprechende Koppelvorrichtung über einen Netzanschluss zum Anschliessen an ein Niederspannungs-Stromversorgungsnetz sowie einen Geräteanschluss zum Anschliessen eines Modems, d.h. eines Gerätes zum Senden und/oder Empfangen eines HF-Signals. Zur Speisung eines am Geräteanschluss angeschlossenen Modems umfasst die Koppelvorrichtung zudem einen Spannungswandler, welcher zur Umwandlung einer am Netzanschluss anliegenden Niederspannung in eine am Geräteanschluss ausgebbare Kleinspannung dient. Zum Ein- bzw. Auskoppeln eines zu sendenden bzw. zu empfangenden HF-Signals verfügt die Koppelvorrichtung schliesslich über einen Koppler, der eine hochfrequenzmässige Kopplung zwischen dem Netzanschluss und dem Geräteanschluss bewirkt.

Eine erfindungsgemässe Koppelvorrichtung weist eine ganze Reihe von Vorteilen auf. Sie ermöglicht eine vom Modem getrennte Realisierung jener Schaltungsteile, an welche besondere Anforderungen bezüglich Isolationsfestigkeit (Personen- und Sachschutz) gestellt werden. Sie kann zu äusserst geringen Kosten in grossen Stückzahlen hergestellt werden. Länderspezifische Anpassungen, beispielsweise hinsichtlich der Isolationsfestigkeit, der Netzspannung oder der Netzstecker, können problemlos in der Koppelvorrichtung realisiert werden, sodass überall dasselbe Modem unverändert verwendet werden kann. Durch die höheren Stückzahlen sowie das Auslagern des Koppiers und des Netzteils einerseits, aber auch durch das Wegfallen der viel Platz beanspruchenden Isolationsstrecken andererseits (beispielsweise die Isolationsstrecke zwischen dem Primärteil der Stromversorgung und der EMV-Abschirmung des Modems) kann auch das Modem kompakt und kostengünstig realisiert werden. Zudem fällt durch die Auslagerung des Netzteils ein Teil der Vertustwärme extern an, was eine weitere Komprimierung des Modems erlaubt. Durch den geringeren Platzbedarf und die kleineren Spannungsniveaus ermöglicht die Erfindung zudem die Realisierung eines entsprechenden Modems als PC Einschubkarte, was mit den bekannten Lösungen praktisch unmöglich ist.

Zur Übertragung der elektrischen Energie vom Stromversorgungsnetz zum Endverbraucher wird üblicherweise Niederspannungs-Wechselstrom verwendet. Der Spannungswandler ist deshalb vorzugsweise derart ausgebildet, dass er eine am Netzanschluss anliegende Wechsel-Niederspannung in eine am Geräteanschluss ausgebbare Gleich-Kleinspannung (AC/DC-Wandler) umwandeln kann, wobei selbstverständlich auch andere Spannungswandier (AC/AC, DC/DC oder auch DC/AC-Wandler) verwendet werden können, welche die gelieferte Netzspannung in eine zur Speisung des Modems verwendbare Kleinspannung umwandeln.

Bei einer bevorzugten Ausführungsform der Erfindung ist vor und/oder nach dem Spannungswandler, d.h. zwischen dem Netzanschluss und dem Spannungswandler bzw. zwischen dem Spannungswandler und dem Geräteanschluss ein Tiefpassfilter vorgesehen. Diese Tiefpassfilter verhindern die Ausbreitung von ungewollten, hochfrequenten Störungen, welche beispielsweise durch unsaubere Leitungsabschlüsse oder Schaltvorgänge erzeugt werden und die gewollte Übertragung eines ins Stromnetz eingekoppeleten HF-Signals stark beeinflussen können.

Unter dem Begriff Tiefpassfilter sind im Zusammenhang mit der Erfindung Tiefpassfilter zu verstehen, welche für ein eingangsseitiges HF-Signal hochohmig sind. Sie sollen in Längsrichtung also Induktivitäten, aber keine Kapazitäten in Querrichtung aufweisen.

Die HF-Kopplung zwischen dem Netzanschluss und dem Geäteanschluss wird vorzugsweise durch ein Hochpassfilter erreicht, welches den Spannungswandler quasi umgeht. Das Hochpassfilter verhindert, dass niederfrequente Signale wie z.B. das Speisesignal direkt vom Netz- auf den Geräteanschluss geleitet werden. Das Hochpassfilter ist derart dimensioniert, dass es nur die zu übertragenden HF-Signale vom Netzanschluss auf den Geräteanschluss bzw. vom Geräteanschluss auf den Netzanschluss koppelt.

Die Unterdrückung von hochfrequenten Störsignalen ist nur eine Aufgabe der Tiefpassfilter. In erster Linie dienen diese der Entkopplung des Spannungswandlers vom über die Hochpassfilter führenden Signalübertragungsweg. Der Spannungswandler soll sowohl eingangs- als auch ausgangsseitig möglichst keine Signalleistung absorbieren. D.h. die Tiefpassfilter vermindern die Beeinflussung des Signalweges durch den Spannungswandler.

Dieser einfache aber effiziente Aufbau der Koppelvorrichtung ermöglicht eine kompakte und günstige Realisierung, wobei anstatt Hoch- und Tiefpassfiltern beispielsweise auch geeignet dimensionierte Bandpassfilter verwendet werden können.

Die Koppelvorrichtung ist mit ihrem Netzanschluss beispielsweise an ein Niederspannungs-Stromversorgungsnetz angeschlossen. Die Koppelvorrichtung verfügt hierzu beispielsweise über einen Netzstecker, welcher direkt in eine Netzsteckdose eingesteckt werden kann. Der Netzanschluss könnte auch als Netzkabel mit einem am netzseitigen Ende ausgebildeten Netzstecker mit Stiften realisiert sein, wobei das Netzkabel entweder direkt in die Koppelvorrichtung hineingeführt, oder über einen Stecker mit einer entsprechend ausgebildeten Buchse an der Koppelvorrichtung verbunden wird. Solche Netzkabel werden oft zum Anschliessen von Geräten an Versorgungsnetze verwendet. Am Geräteanschluss kann beispielsweise ein Modem angeschlossen werden.

Der Spannungswandler wandelt die am Netzanschluss anliegende Niederspannung, beispielsweise eine Wechselspannung mit einer Frequenz in der Grössenordnung von 50 Hz und einer Amplitude in der Grössenordnung von 230 V bzw. 400 V, in eine Kleinspannung, beispielsweise eine Gleichspannung in der Grössenordnung von ca. 12 V, um.

Der Geräteanschluss der Koppelvorrichtting ist mit Vorteil derart ausgebildet, dass ein mit elektrischer Energie betreibbares Gerät daran angeschlossen und mit der vom Spannungswandler erzeugten Kleinspannung gespiesen werden sowie gleichzeitig ein am Netzanschluss empfangenes und über den Koppler auf den Geräteanschluss gekoppeltes HF-Signal über den Geräteanschluss an das daran angeschlossene Gerät gesendet werden kann. Das funktioniert natürlich auch in der anderen Richtung, d.h. ein von einem am Geräteanschluss angeschlossenen Gerät empfangenes HF-Signal wird vom Koppler auf den Netzausgang bzw. das Niederspannungs-Stromversorgungsnetz gekoppelt, wobei das Gerät über den Geräteanschluss gleichzeitig mit der vom Spannungswandler erzeugten Kleinspannung gespiesen wird.

Bei einer weiteren bevorzugten Ausführungsform der Koppelvorrichtung weist diese zumindest einen zusätzlichen Geräteanschluss auf, an weichen zwecks Energieversorgung ein mit elektrischer Energie betreibbares Gerät angeschlossen werden kann.

Die Ausbildung dieses zusätzlichen Geräteanschlusses richtet sich im Allgemeinen nach dem zu liefernden Spannungssignal. Soll das daran angeschlossene Gerät mit der Netz-Niederspannung versorgt werden, ist er beispielsweise als eine zu den üblichen Netzsteckdosen kompatible Gerätesteckdose ausgebildet, in welche das Netzkabel des anzuschliessenden Gerätes eingesteckt werden kann. Soll das Gerät hingegen mit einer Kleinspannung, wie sie der Spannungswandler liefert, gespiesen werden, ist der Geräteanschluss den entsprechenden Anforderungen und Vorschriften angepasst.

Um möglichst viele Geräte, beispielsweise einen Computer zur Verarbeitung der über Koppelvorrichtung und Modem empfangenen Nachrichten, an eine erfindungsgemässe Koppelvorrichtung anschliessen zu können, ist der zusätzliche Geräteanschluss bevorzugt zur Speisung mit Netzspannung ausgebildet. Der zusätzliche Geräteanschluss wird hierfür über eine Netzverbindung mit dem Netzanschluss der Koppelvorrichtung verbunden, wobei die Netzverbindung über ein zwischen dem Spannungswandler und dem Netzanschluss liegendes Tiefpassfilter führt, falls ein solches vorhanden ist. D.h. die Netzspannung wird, vom Netzanschluss her gesehen, erst hinter dem Tiefpassfilter abgegriffen und auf den zusätzlichen Geräteanschluss geführt, was zur Folge hat, dass einerseits eine Entkopplung des angeschlossenen Gerätes vom Signalübertragungsweg erreicht wird und andererseits unerwünschte hochfrequente Störsignale weder vom Netz her in das angeschlossene Gerät, noch vom Gerät her ins Netz gelangen können.

Eine konkrete, bevorzugte Ausführungsform der Koppelvorrichtung dient zum Anschliessen eines mit einer Gleichspannung gespiesenen Modems an ein Niederspannungs-Stromversorgungsnetz mit zumindest zwei Stromleitern, d.h. einem Nullieiter und zumindest einem Phasenleiter. Der Spannungswandler weist demzufolge zwei Eingangs- und zwei Ausgangskontakte auf. Der Geräteanschluss umfasst eine positive und eine negative Elektrode, welche jeweils über eine Verbindungsleitung mit den beiden Ausgangskontakten des Spannungswandlers verbunden sind. Der Netzanschluss und auch ein allfälliger zusätzlicher Geräteanschluss umfassen einen Nullieiter und zumindest einen Phasenleiter, wobei je zwei dieser Stromleiter über eine Verbindungsleitung mit einem Eingangskontakt des Spannungswandlers verbunden sind.

Im Prinzip ist es auch möglich, dass der Spannungswandler über mehr als zwei Eingangs- bzw. Ausgangskontakte verfügt und dass jeder Stromleiter mit entsprechenden Eingangskontakten des Spannungswandlers verbunden ist. In diesem Fall liefert der Spannungswandler entweder mehrere Ausgangsspannungen oder er kann derart gesteuert werden, dass er jeweils die Spannung zwischen zwei der angeschlossenen Stromleiter umwandelt und am Ausgang zur Verfügung stellt.

Zwei der Stromleiter des Netzanschlusses sind über Hochfrequenzleitungen mit je einer Elektrode des Geräteanschlusses verbunden, wobei typischerweise diejenigen beiden Stromleiter ausgewählt werden, über welche das HF-Signal übertragen wird bzw. übertragen werden soll. Dies werden in der Regel der Nullieiter und ein Phasenleiter sein, wobei das HF-Signal auch über zwei Phasenleiter übertragen werden kann.

Selbstverständlich könnten die Hochfrequenzleitungen auch über eine Art Phasenwähler geführt werden, welcher manuell oder automatisch steuerbar jeweils zwei der Stromleiter vom Netzanschluss zu den beiden Elektroden am Geräteanschluss verbindet.

Eine bevorzugte Realisierung des Hochpassfilters zwischen Netz- und Geräteanschluss umfasst lediglich eine Kapazität pro Verbindungsleitung, wobei der Wert der Kapazitäten auf die Frequenz der zu übertragenden HF-Signale abgestimmt ist.

Eine bevorzugte Realisierung der Tiefpassfilter zwischen Netzanschluss und Spannungswandler bzw. zwischen Spannungswandler und Geräteanschluss umfasst lediglich eine Induktivität, beispielsweise eine Drosselspule pro Verbindungsleitung. Auch hier sind die Werte der Induktivitäten auf die Übertragungsfrequenzen bzw. die zu eliminierenden Störsignale abgestimmt.

Diese Induktivitäten, insbesondere diejenigen zwischen dem Netzanschluss und dem Spannungswandler, eliminieren bzw. minimieren den Einfluss eines an den zusätzlichen Geräteanschluss angeschlossenen Gerätes auf die Übertragung des HF-Signals.

Um einen gewissen Schutz für die Koppelvorrichtung selber oder für daran angeschlossene Geräte zu erreichen, ist die Koppelvorrichtung mit Vorteil zum Anschliessen an ein Stromversorgungsnetz mit einem Schutzleiter, beispielsweise einem Erdleiter, ausgebildet. Der Netzanschluss verfügt hierzu ebenfalls über einen Schutzleiter, welcher zu einem allenfalls vorhandenen zusätzlichen Geräteanschluss weitergeführt wird, wobei ein zwischen dem Netzanschluss und dem Spannungswandler vorhandenes Tiefpassfilter, über welches die Stromleiter zwischen Netz- und zusätzlichem Geräteanschluss geführt sind, den Schutzleiter nicht einschliesst. D.h. der Schutzleiter weist keine Induktivität auf.

Obwohl zweifellos auch Koppelvorrichtungen, deren Komponenten in ein anderes Gerät integriert oder auf zwei oder mehr Geräte verteilt sind, durch die Erfindung abgedeckt sind, wird die Koppelvorrichtung bevorzugt in einem eigenen, formstabilen Gehäuse untergebracht. Der Netzanschluss der Koppelvorrichtung ist hierbei als Netzstecker zum Einstekken in eine Netzsteckdose des entsprechenden Niederspannungs-Stromversorgungsnetzes ausgebildet. Der Geräteanschluss ist als Speise/Signalkabel ausgeführt, welches aus dem Gehäuse herausgeführt ist und am anderen Ende eine auf die Signalfrequenz und das angeschlossene Gerät abgestimmte Anschlussvorrichtung aufweist. Der allenfalls vorhandene zusätzliche Geräteanschluss ist als Steckdose ausgebildet, in welche beispielsweise Gerätenetzstecker eingesteckt werden können, die zum Einstecken in eine Netzsteckdose des entsprechenden Niederspannungs-Stromversorgungsnetzes ausgebildet sind.

Die Form des Gehäuses und die Anordnung der Anschlüsse ist dabei so gewählt, dass die Koppelvorrichtung mit ihrem Netzanschluss an ein Niederspannungs-Stromversorgungsnetz und gleichzeitig sowohl ein mit der Kleinspannung zu speisendes Gerät am Geräteanschluss als auch ein mit Netzspannung zu speisendes Gerät am allenfalls vorhandenen zusätzlichen Geräteanschluss angeschlossen werden können.

Eine Koppelvorrichtung der eben beschriebenen Art kann beispielsweise in einer Übertragungsanordnung mit einer Sende/Empfangsvorrichtung eingesetzt werden, wobei die Übertragungsanordnung zum Ein- bzw. Auskoppeln von Nachrichten in ein bzw. aus einem Niederspannungs-Stromversorgungsnetz dient. Aus den zu übertragenden Nachrichten wird von der Sende/Empfangsvorrichtung, insbesondere einem Modem, ein HF-Signal generiert, indem es die Nachrichten nach einer geeigneten Vorverarbeitung beispielsweise einem hochfrequenten Trägersignal aufmoduliert. Die Sende/Empfangsvorrichtung ist an den Geräteanschluss der Koppelvorrichtung angeschlossen, über welchen sie das HF-Signal an diese weiterleitet. Die Koppelvorrichtung koppelt das HF-Signal vom Geräte- auf den Netzanschluss und damit in das Niederspannungs-Stromversorgungsnetz. Über den Geräteanschluss wird die Sende/Empfangsvorrichtung zudem mit der vom Spannungswandler in eine Kleinspannung umgewandelten Netzspannung mit elektrischer Energie versorgt.

Selbstverständlich funktioniert die Übertragung der Nachrichten bzw. des HF-Signals auch in der anderen Richtung. Das HF-Signal gelangt über den Netzanschluss in die Koppelvorrichtung, wo es über das Hochpassfilter auf den Geräteanschluss gekoppelt wird. Die am Geräteanschluss angeschlossene Sende/Empfangsvorrichtung demoduliert das HF-Signal und stellt die darin enthaltenen Nachrichten zur Weiterverarbeitung zur Verfügung. Auch in diesem Fall wird die Netzspannung vom Spannungswandler in eine Kleinspannung umgewandelt und die Sende/Empfangsvorrichtung über den Geräteanschluss damit gespiesen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematisch dargestellte Koppelvorrichtung;
- Fig. 2: eine schematisch dargestellte Realisierung der Koppelvorrichtung;
- Fig. 3: eine alternative Ausführungsform der Koppelvorrichtung;
- Fig. 4: eine weitere alternative Ausführungsform der Koppelvorrichtung mit andern Anschlüssen und
- Fig. 5: eine erfindungsgemässe Übertragungsanordnung zur Übertragung von Nachrichten über ein Niederspannungs-Stromversorgungsnetz.

Grundsätzlich sind in den Figuren gleiche Teile mit gleichen Bezugszeichen versehen.

### Wege zur Ausführung der Erfindung

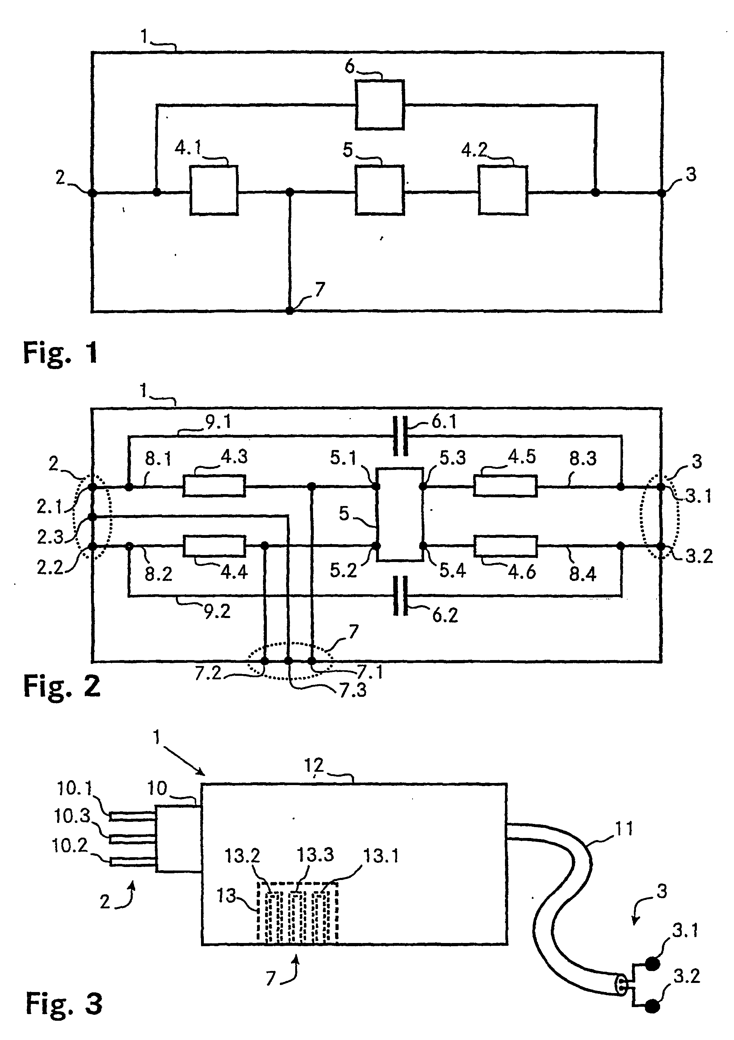

In Figur 1 ist schematisch ein Beispiel einer erfindungsgemässen Koppelvorrichtung 1 dargestellt. Auf einer Seite befindet sich der Netzanschluss 2 und auf der anderen Seite der Geräteanschluss 3. Der Netzanschluss 2 ist über zwei verschiedene Wege mit dem Geräteanschluss 3 verbunden. Der erste Weg führt vom Netzanschluss 2 über ein Tiefpassfilter 4.1 zum Eingang eines Spannungswandlers 5 und von dessen Ausgang über ein weiteres Tiefpassfilter 4.2 zum Geräteanschluss 3. Der zweite Weg führt vom Netzanschluss 2 über ein Hochpassfilter 6 direkt zum Geräteanschluss 3. Weiter weist diese Koppelvorrichtung 1 einen zusätzlichen Geräteanschluss 7 auf, welcher über das Tiefpassfilter 4.1 ebenfalls mit dem Netzanschluss 2 verbunden ist. Für den zusätzlichen Geräteanschluss 7 wird also zwischen dem Tiefpassfilter 4.1 und dem Spannungswandler 5 die am Netzanschluss 2 anliegende, tiefpassgefilterte Netzspannung abgegriffen.

Der Netzanschluss 2 dient zum Anschliessen der Koppelvorrichtung 1 an ein Niederspannungs-Stromversorgungsnetz. Als Beispiel sei ein Stromversorgungsnetz mit einem Nullleiter, zumindest einem Phasenleiter und einem Erdleiter genannt, wobei die Nennfrequenz 50 Hz und die Nennspannung 230 V (Phase - Nullleiter) bzw. 400 V (Phase - Phase) beträgt. Der Spannungswandler 5 transformiert die am Netzanschluss 2 anliegende Netzspannung in eine Kleinspannung, beispielsweise eine 12 V-Gleichspannung, mit welcher ein am Geräteanschluss 3 angeschlossenes Gerät gespiesen werden kann. Die Tiefpassfilter 4.1 und 4.2 bewirken eine Entkopplung des Signalübertragungsweges vom Spannungswandler 5 bzw. vom zusätzlichen Geräteanschluss 7. Zudem verhindern die Tiefpassfilter 4.1 bzw. 4.2, dass hochfrequente Signalanteile im Netzsignal über den Spannungswandler 5 zum Geräteanschluss 3, respektive über den Spannungswandler 5 in das Stromversorgungsnetz gelangen. Die gewollte Übertragung der hochfrequenten Nachrichtensignale erfolgt über das Hochpassfilter 6, welches diese Signale vom Netz- auf den Geräteanschluss bzw. vom Geräte- auf den Netzanschluss koppelt.

Figur 2 zeigt schematisch eine beispielhafte Realisierung der Koppelvorrichtung 1 aus Figur 1. Der Netzanschluss 2 umfasst einen Phasenleiter 2.1, einen Nullleiter 2.2 und einen Erdleiter 2.3. Der Geräteanschluss 3 umfasst eine positive und eine negative Elektrode 3.1 bzw. 3.2. Der Spannungswandler 5 weist zwei Eingangskontakte 5.1, 5.2 und zwei Ausgangskontakte 5.3, 5.4 auf, wobei der Eingangskontakt 5.1 über eine Verbindungsleitung 8.1 mit dem Phasenleiter 2.1, der Eingangskontakt 5.2 über die Verbindungsleitung 8.2 mit dem Nullleiter 2.2, der Ausgangskontakt 5.3 über eine Verbindungsleitung 8.3 mit der positiven Elektrode 3.1 und der Ausgangskontakt 5.4 über eine Verbindungsleitung 8.4 mit der negativen Elektrode 3.2 verbunden ist.

Für die Hochfrequenzkopplung ist der Phasenleiter 2.1 über eine Hochfrequenzleitung 9.1 und der Nullieiter 2.2 über eine Hochfrequenzleitung 9.2 mit der positiven bzw. negativen Elektrode 3.1, 3.2 verbunden, wobei das Hochpassfilter durch je eine Kapazität, beispielsweise ein entsprechend dimensionierter Kondensator, 6.1 bzw. 6.2 pro Hochfrequenzleitung 9.1 resp. 9.2, gebildet wird.

Das Tiefpassfilter 4.1 und das Tiefpassfilter 4.2 werden gebildet durch je eine Induktivität 4.3, 4.4, 4.5, 4.6, beispielsweise eine entsprechend dimensionierte Drosselspule, in den beiden Verbindungsleitungen 8.1 und 8.2 respektive 8.3 und 8.4.

Der zusätzliche Geräteanschluss 7 verfügt wie der Netzanschluss 2 über einen Phasenleiter 7.1, einen Nullieiter 7.2 sowie einen Erdleiter 7.3, wobei der Erdleiter 7.3 direkt mit dem Erdleiter 2.3 des Netzanschlusses 2 und der Phasen- sowie der Nullieiter 7.1, 7.2 mit den entsprechenden Verbindungsleitungen 8.1 bzw. 8.2 verbunden sind. Der Abgriff von den Verbindungsleitungen 8.1 bzw. 8.2 erfolgt jeweils zwischen der Induktivität 4.3 bzw. 4.4 und dem Spannungswandler 5.

Figur 3 zeigt ein konkretes Ausführungsbeispiel der eben beschriebenen Koppelvorrichtung 1. Der Netzanschluss 2 ist als Netzstecker 10 mit drei Kontaktstiften 10.1, 10.2 und 10.3 für den Phasen-, den Null- und den Erdleiter 2.1, 2.2, 2.3 ausgebildet. Der Geräteanschluss 3 ist realisiert als Anschlusskabel 11, beispielsweise ein Kabel mit parallel geführten Leitern, wobei zwei Kontakte für die positive und die negative Elektrode 3.1, 3.2 vorgesehen sind. Der zusätzliche Geräteanschluss 7 ist an sich nicht sichtbar, da er als Steckdose 13 in das Gehäuse 12 der Koppelvorrichtung 1 integriert wurde und ist daher gestrichelt dargestellt. Die Steckdose 13 umfasst drei Kontaktbuchsen 13.1, 13.2, 13.3 für den Phasen-, den Null- und den Erdleiter 7.1, 7.2, 7.3.

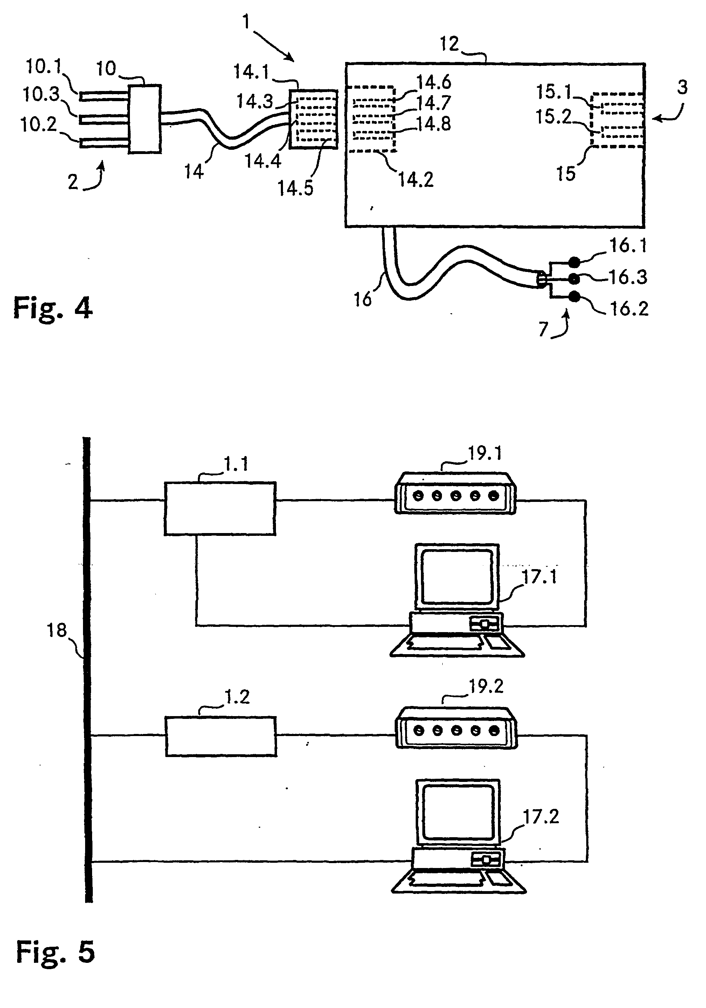

Figur 4 zeigt ein anderes Ausführungsbeispiel, bei welchem sich der Netzstecker 10 mit den Kontaktstiften 10.1, 10.2 und 10.3 am Ende eines Netzkabels 14 befindet, welches zum Gehäuse 12 der Koppelvorrichtung 1 geführt ist. Das Netzkabel 14 ist entweder direkt in das Gehäuse geführt oder verfügt, wie in Figur 4 dargestellt, über einen Netzstecker 14.1 mit Kontaktbuchsen 14.3, 14.4, 14.5, welcher in eine passende Steckdose 14.2 mit entsprechenden Kontaktstiften 14.6, 14.7, 14.8 am Gehäuse 12 der Koppelvorrichtung 1 eingesteckt werden kann. Der Geräteanschluss 3 ist als Steckdose 15 mit zwei Kontaktbuchsen 15.1, 15.2 in das Gehäuse integriert, wobei die Ausführung des Geräteanschlusses 3 gemäss Figur 3 bevorzugt wird. Der zusätzliche Geräteanschluss 7 ist als Anschlusskabel 16 mit drei Anschlusskontakten 16.1, 16.2 und 16.3 ausgeführt.

Die Übertragungsanordnung aus Figur 5 dient zur Übertragung von Nachrichten zwischen zwei Computern 17.1, 17.2 über ein Niederspannungs-Stromversorgungsnetz 18. Beide Computer 17.1, 17.2 sind zu diesem Zweck mit einem Modem 19.1, 19.2 verbunden. Das Modem 19.1 selber ist über eine erfindungsgemässe Koppelvorrichtung 1.1 mit dem Niederspannungs-Stromversorgungsnetz 18 verbunden, wobei die Koppelvorrichtung 1.1 einen zusätzlichen Geräteanschluss aufweist, über den der Computer 17.1 mit elektrischer Energie versorgt wird. Das Modem 19.1 wird von der Koppelvorrichtung 1.1 mit einer von dieser erzeugten Geräte-Kleinspannung mit Strom versorgt.

Das Modem 19.2 ist ebenfalls an einer erfindungsgemässen Koppelvorrichtung 1.2 angeschlossen, welche im Gegensatz zur Koppelvorrichtung 1.1. jedoch nicht über einen zusätzlichen Geräteanschluss zur Speisung weiterer Geräte verfügt. Der Computer 17.2 ist deshalb zwecks Energieversorgung direkt an das Niederspannungs-Stromversorgungsnetz 18 angeschlossen.

Mit dieser Anordnung ist es möglich, Nachrichten zwischen den beiden Computern 17.1, 17.2 über das Niederspannungs-Stromversorgungsnetz 18 auszutauschen. Eine vom Computer 17.1 erzeugte Nachricht wird an das Modem 19.1 weitergeleitet, welches die Nachricht einem hochfrequenten Trägersignal aufmoduliert und an die Koppelvorrichtung 1.1 weitergibt. Diese koppelt das modulierte Trägersignal in das Niederspannungs-Stromversorgungsnetz 18 ein. Die Koppelvorrichtung 1.2 koppelt das über das Niederspannungs-Stromversorgungsnetz 18 empfangene HF-Signal wieder aus und sendet es an das Modem 19.2 weiter, welches die zu übermittelnde Nachricht durch Demodulation zurückgewinnt und diese an den Computer 17.2 übergibt. Auf die gleiche Weise funktioniert die Übertragung auch in der anderen Richtung.

Zusammenfassend ist festzustellen, dass es die Erfindung ermöglicht, eine einfache und kostengünstig zu realisierende Anordnung zur Übertragung von hochfrequenten Nachrichtensignalen über ein Niederspannungs-Stromversorgungsnetz aufzubauen. Indem nämlich diejenigen Bauteile der Anordnung, welche Niederspannung führen, in einer vom entsprechenden Modem getrennten Koppelvorrichtung untergebracht werden, lässt sich sowohl das Modem, als auch die Koppelvorrichtung selber kostenkünstig und kompakt realisieren. Die erfindungsgemässe Koppelvorrichtung übernimmt dabei auf elegante Art und Weise gleichzeitig mehrere Funktionen: Ein- und Auskoppeln des HF-Signals, Bindeglied zwischen Modem und Stromversorgungsnetz und Stromversorgung des Modems mit einer Kleinspannung, wobei das HF-Signal und die elektrische Energie über ein einziges Verbindungskabel zum Modem geführt werden.

## Patentansprüche

1. Koppelvorrichtung (1) mit einem Netzanschluss (2) zum Anschliessen an ein Niederspannungs-Stromversorgungsnetz und mit einem Geräteanschluss (3) zum Anschliessen eines Gerätes zum Senden und/oder Empfangen eines HF-Signals, **dadurch gekennzeichnet, dass** die Koppelvorrichtung (1) einen Spannungswandler (5) zur Umwandlung einer am Netzanschluss (2) anliegenden Niederspannung in eine am Geräteanschluss (3) ausgebbare Kleinspannung sowie einen Koppler (6) für eine hochfrequenzmässige Kopplung zwischen dem Netzanschluss (2) und dem Geräteanschluss (3) aufweist.

2. Koppelvorrichtung (1) nach Anspruch 1, **dadurch gekennzeichnet, dass** der Spannungswandler (5) derart ausgebildet ist, dass er eine am Netzanschluss (2) anliegende Wechsel-Niederspannung in eine am Geräteanschluss (3) ausgebbare Gleich-Kleinspannung umwandeln kann.

3. Koppelvorrichtung (1) nach Anspruch 1 oder 2, **dadurch gekennzeichnet, dass** zwischen dem Spannungswandler (5) und dem Netzanschluss (2) und/oder zwischen dem Spannungswandler (5) und dem Geräteanschluss (3) ein Tiefpassfilter (4.1, 4.2) vorgesehen ist.

4. Koppelvorrichtung (1) nach einem der Ansprüche 1 bis 3, **dadurch gekennzeichnet, dass** der Koppler (6) ein zwischen dem Netzanschluss (2) und dem Geräteanschluss (3) liegendes Hochpassfilter (6.1, 6.2) umfasst, wobei ein über den Geräteanschluss (3) empfangenes HF-Signal auf den Netzanschluss (2) bzw. ein über den Netzanschluss (2) empfangenes HF-Signal auf den Geräteanschluss (3) gekoppelt werden kann.

5. Koppelvorrichtung (1) nach einem der Ansprüche 1 bis 4, **dadurch gekennzeichnet, dass** der Geräteanschluss (3) derart ausgebildet ist, dass mit der Kleinspannung ein an den Geräteanschluss angeschlossenes Gerät mit elektrischer Energie versorgt werden kann.

6. Koppelvorrichtung (1) nach einem der Ansprüche 1 bis 5, **dadurch gekennzeichnet, dass** sie zumindest einen zusätzlichen Geräteanschluss (7) zur Energieversorgung eines mit elektrischer Energie betreibbaren Gerätes aufweist.

7. Koppelvorrichtung (1) nach Anspruch 6, **dadurch gekennzeichnet, dass** der zusätzliche Geräteanschluss (7) zur Speisung eines daran angeschlossenen Gerätes über eine Netzverbindung mit dem Netzanschluss (2) verbunden ist, wobei die Netzverbindung über ein allfällig zwischen dem Netzanschluss und dem Spannungswandler (5) liegendes Tiefpassfilter (4.1) verläuft.

8. Koppelvorrichtung (1) nach einem der Ansprüche 1 bis 7, **dadurch gekennzeichnet, dass**
- der Geräteanschluss (3) eine positive (3.1) und eine negative Elektrode (3.2) und
- der Netzanschluss (2) sowie ein allenfalls vorhandener zusätzlicher Geräteanschluss (7) je einen Nullieiter (2.2) und zumindest einen Phasenleiter (2.1) umfassen,
- ein Eingang des Spannungswandlers (5) über zwei Verbindungsleitungen mit dem Nullleiter und dem zumindest einen Phasenleiter bzw. mit zwei Phasenleitern verbunden ist,
- ein Ausgang des Spannungswandlers über zwei Verbindungsleitungen mit den beiden Elektroden des Geräteanschlusses verbunden ist und
- die beiden Elektroden des Geräteanschlusses über zwei Hochfrequenzleitungen mit dem Nullieiter und dem zumindest einen Phasenleiter bzw. mit zwei Phasenleitern verbunden sind,
wobei ein allenfalls vorhandenes Tiefpassfilter (4.1, 4.2) durch je eine Induktivität pro Verbindungsleitung und ein allenfalls vorhandenes Hochpassfilter (6.1, 6.2) durch je eine Kapazität pro Hochfrequenzleitung gebildet ist.

9. Koppelvorrichtung (1) nach einem der Ansprüche 1 bis 8, **dadurch gekennzeichnet, dass** der Netzanschluss (2) und ein allenfalls vorhandener zusätzlicher Geräteanschluss (7) einen Schutzleiter (2.3), insbesondere einen Erdleiter umfassen.

10. Koppelvorrichtung (1) nach einem der Ansprüche 1 bis 9, **dadurch gekennzeichnet, dass** sie in einem formstabilen Gehäuse untergebracht, der Netzanschluss (2) als Netzstecker, der Geräteanschluss (3) als aus dem Gehäuse herausgeführtes Speise/Signalkabel und ein allenfalls vorhandener zusätzlicher Geräteanschluss (7) als Steckdose ausgebildet ist, wobei das Gehäuse derart ausgeführt ist, dass die Koppelvorrichtung mit ihrem Netzanschluss an ein Niederspannungs-Stromversorgungsnetz, ein mit der Kleinspannung zu speisendes Gerät am Geräteanschluss und ein mit Netzspannung zu speisendes Gerät am allenfalls vorhandenen zusätzlichen Geräteanschluss angeschlossen werden kann.

11. Übertragungsanordnung zum Versenden bzw. Empfangen eines HF-Signals über ein Niederspannungs-Stromversorgungsnetz (18), umfassend ein Sende/Empfangsgerät (19.1) und eine Koppelvorrichtung (1.1), **dadurch gekennzeichnet,**
- **dass** die Koppelvorrichtung (1.1) einen Netzanschluss (2) zum Anschliessen an das Niederspannungs-Stromversorgungsnetz (18) und einen Geräteanschluss (3) zum Anschliessen des Sende/Empfangsgerätes (19.1) aufweist,
- **dass** die Koppelvorrichtung (1.1) einen Spannungswandler zur Umwandlung einer am Netzanschluss (2) anliegenden Niederspannung in eine am Geräteanschluss (3) ausgebbare Kleinspannung sowie einen Koppler (6) für eine hochfrequenzmässige Kopplung zwischen dem Netzanschluss (2) und dem Geräteanschluss aufweist und
- **dass** die Koppelvorrichtung (1.1) über ihren Netzanschluss derart an das Niederspannungs-Stromversorgungsnetz (18) und das Sende/Empfangsgerät (19.1) über den Geräteanschluss (3) der Koppelvorrichtung (1.1) derart an diese angeschlossen ist, dass das Sende/Empfangsgerät (19.1) über den Geräteanschluss (3) der Koppelvorrichtung (1.1) mit elektrischer Energie versorgt, sowie ein vom Sende/Empfangsgerät (19.1) erzeugtes HF-Signal zur Koppelvorrichtung (1.1) übertragen und von dieser in das Niederspannungs-Stromversorgungsnetz (18) eingekoppelt bzw. ein über das Niederspannungs-Stromversorgungsnetz (18) übertragenes HF-Signal von der Koppelvorrichtung (1.1) aus dem Niederspannungs-Stromversorgungsnetz (18) ausgekoppelt und zum Sende/Empfangsgerät (19.1) übertragen werden kann.

12. Übertragungsanordnung nach Anspruch 11, **dadurch gekennzeichnet, dass** die Koppelvorrichtung zwischen dem Spannungswandler (5) und dem Netzanschluss und/oder zwischen dem Spannungswandler und dem Geräteanschluss ein Tiefpassfilter aufweist.

13. Übertragungsanordnung nach Anspruch 11 oder 12, **dadurch gekennzeichnet, dass** die Koppelvorrichtung ein zwischen dem Netzanschluss und dem Geräteanschluss liegendes Hochpassfilter umfasst, wobei ein vom Sende/Empfangsgerät empfangenes HF-Signal in das Niederspannungs-Stromversorgungsnetz eingekoppelt bzw. ein über das Niederspannungs-Stromversorgungsnetz übermitteltes HF-Signal aus dem Niederspannungs-Stromversorgungsnetz ausgekoppelt und an das Sende/Empfangsgerät weitergegeben werden kann.

14. Übertragungsanordnung nach einem der Ansprüche 11 bis 13, **dadurch gekennzeichnet, dass** die Koppelvorrichtung einen zusätzlichen Geräteanschluss (7) zur Energieversorgung eines mit elektrischer Energie betreibbaren Gerätes aufweist.

15. Übertragungsanordnung nach einem der Ansprüche 11 bis 14, **dadurch gekennzeichnet, dass**
- die Sende/Empfangsvorrichtung einen zweipoligen Speise/Signalanschluss aufweist, über welchen sie mit elektrischer Energie versorgt werden und gleichzeitig das HF-Signal empfangen bzw. versenden kann,
- der Geräteanschluss der Koppelvorrichtung eine positive und eine negative Elektrode und
- ihr Netzanschluss sowie ein allenfalls vorhandener zusätzlicher Geräteanschluss je einen Nullieiter und zumindest einen Phasenteiter umfassen,
- ein Eingang des Spannungswandlers über zwei Verbindungsleitungen mit dem Nullieiter und dem zumindest einen Phasenleiter bzw. mit zwei Phasenleitern verbunden ist,
- ein Ausgang des Spannungswandlers über zwei Verbindungsleitungen mit den beiden Elektroden des Geräteanschlusses verbunden ist und
- die beiden Elektroden des Geräteanschlusses über zwei Hochfrequenzleitungen mit dem Nullieiter und dem zumindest einen Phasenleiter bzw. mit zwei Phasenleitern verbunden sind,
wobei ein allenfalls vorhandenes Tiefpassfilter durch je eine Induktivität pro Verbindungsleitung und ein allenfalls vorhandenes Hochpassfilter durch je eine Kapazität pro Hochfrequenzleitung gebildet ist,
der Netzanschluss der Koppelvorrichtung zum Anschliessen an ein Niederspannungs-Stromversorgungsnetz mit einem Nullieiter und zumindest einem Phasenleiter ausgebildet ist und
die beiden Elektroden des Geräteanschlusses der Koppelvorrichtung mit je einem Pol des zweipoligen Signalanschlusses der Sende/Empfangsvorrichtung verbunden sind.

16. Übertragungsanordnung nach einem der Ansprüche 11 bis 15, **dadurch gekennzeichnet, dass** zum Anschliessen der Koppelvorrichtung an ein einen Schutzleiter aufweisendes Niederspannungs-Stromversorgungsnetz der Netzanschluss sowie ein allenfalls vorhandener zusätzlicher Geräteanschluss einen Schutzleiter, insbesondere einen Erdleiter umfassen.

## Claims

1. Coupling device (1) having a mains connection (2) for connection to a low-voltage electricity supply system and having a device connection (3) for the connection of a device for transmitting and/or receiving a HF signal, **characterised in that** the coupling device (1) has a voltage transformer (5) for converting a low voltage applied to the mains connection (2) into an extra-low voltage which can be output at the device connection (3), and also a coupler (6) for a high-frequency coupling between the mains connection (2) and the device connection (3).

2. Coupling device (1) according to claim 1, **characterised in that** the voltage transformer (5) is in such a form that it is able to convert an alternating low voltage applied to the mains connection (2) into a d.c. extra-low voltage which can be output at the device connection (3).

3. Coupling device (1) according to claim 1 or 2, **characterised in that** a low-pass filter (4.1, 4.2) is provided between the voltage transformer (5) and the mains connection (2) and/or between the voltage transformer (5) and the device connection (3).

4. Coupling device (1) according to any one of claims 1 to 3, **characterised in that** the coupler (6) comprises a high-pass filter (6.1, 6.2) located between the mains connection (2) and the device connection (3), it being possible for a HF signal received by way of the device connection (3) to be coupled to the mains connection (2) or for a HF signal received by way of the mains connection (2) to be coupled to the device connection (3).

5. Coupling device (1) according to any one of claims 1 to 4, **characterised in that** the device connection (3) is in such a form that, by means of the extra-low voltage, a device connected to the device connection can be supplied with electrical energy.

6. Coupling device (1) according to any one of claims 1 to 5, **characterised in that** it has at least one additional device connection (7) for supplying energy to a device operable by means of electrical energy.

7. Coupling device (1) according to claim 6, **characterised in that** the additional device connection (7), for supplying current to a device connected thereto, is connected to the mains connection (2) by way of a mains connector, the mains connector running via a low-pass filter (4.1) located, where applicable, between the mains connection and the voltage transformer (5).

8. Coupling device (1) according to any one of claims 1 to 7, **characterised in that**
- the device connection (3) comprises a positive electrode (3.1) and a negative electrode (3.2) and
- the mains connection (2) and an additional device connection (7) that is optionally present each comprise a neutral conductor (2.2) and at least one phase conductor (2.1),
- an input of the voltage transformer (5) is connected by way of two connecting lines with the neutral conductor and with the at least one phase conductor or with two phase conductors,
- an output of the voltage transformer is connected by way of two connecting lines with the two electrodes of the device connection and
- the two electrodes of the device connection are connected by way of two high-frequency lines with the neutral conductor and with the at least one phase conductor or with two phase conductors,
a low-pass filter (4.1, 4.2) that is optionally present being formed by one inductive resistor per connecting line and a high-pass filter (6.1, 6.2) that is optionally present being formed by one capacitor per high-frequency line.

9. Coupling device (1) according to any one of claims 1 to 8, **characterised in that** the mains connection (2) and an additional device connection (7) that is optionally present comprise a protective conductor (2.3), especially an earthed conductor.

10. Coupling device (1) according to any one of claims 1 to 9, **characterised in that** it is accommodated in a dimensionally stable housing, the mains connection (2) is in the form of a mains plug, the device connection (3) is in the form of a feeder/signalling cable which is guided out of the housing, and an additional device connection (7) that is optionally present is in the form of a socket, the housing being in such a form that the coupling device can be connected with its mains connection to a low-voltage electricity supply system, a device to be supplied with the extra-low voltage can be connected to the device connection, and a device to be supplied with mains voltage can be connected to the additional device connection that is optionally present.

11. Transmission arrangement for transmitting or receiving a HF signal by way of a low-voltage electricity supply system (18), comprising a transmitting/receiving device (19.1) and a coupling device (1.1), **characterised in that**
- the coupling device (1.1) has a mains connection (2) for connection to the low-voltage electricity supply system (18) and a device connection (3) for connection of the transmitting/receiving device (19.1),
- the coupling device (1.1) has a voltage transformer for converting a low voltage applied to the mains connection (2) into an extra-low voltage which can be output at the device connection (3), and also a coupler (6) for a high-frequency coupling between the mains connection (2) and the device connection, and
- the coupling device (1.1) is connected by way of its mains connection to the low-voltage electricity supply system (18), and the transmitting/receiving device (19.1) is connected by way of the device connection (3) of the coupling device (1.1) to the latter, in such a manner that the transmitting/receiving device (19.1) can be supplied by the coupling device (1.1) with electrical energy by way of the device connection (3), and a HF signal produced by the transmitting/receiving device (19.1) can be transmitted to the coupling device (1.1) and coupled by the coupling device (1.1) into the low-voltage electricity supply system (18), or a HF signal transmitted by way of the low-voltage electricity supply system (18) can be coupled by the coupling device (1.1) from the low-voltage electricity supply system (18) and transmitted to the transmitting/receiving device (19.1).

12. Transmission arrangement according to claim 11, **characterised in that** the coupling device has a low-pass filter between the voltage transformer (5) and the mains connection and/or between the voltage transformer and the device connection.

13. Transmission arrangement according to claim 11 or 12, **characterised in that** the coupling device comprises a high-pass filter located between the mains connection and the device connection, it being possible for a HF signal received by the transmitting/receiving device to be coupled into the low-voltage electricity supply system or for a HF signal transmitted by way of the low-voltage electricity supply system to be coupled from the low-voltage electricity supply system and transmitted to the transmitting/receiving device.

14. Transmission arrangement according to any one of claims 11 to 13, **characterised in that** the coupling device has an additional device connection (7) for supplying energy to a device operable by means of electrical energy.

15. Transmission arrangement according to any one of claims 11 to 14, **characterised in that**
- the transmitting/receiving device has a bipolar feeder/signalling connection by way of which it can be supplied with electrical energy and at the same time is able to receive or transmit the HF signal,
- the device connection of the coupling device comprises a positive electrode and a negative electrode and
- its mains connection and an additional device connection that is optionally present each comprise a neutral conductor and at least one phase conductor,
- an input of the voltage transformer is connected by way of two connecting lines with the neutral conductor and with the at least one phase conductor or with two phase conductors,
- an output of the voltage transformer is connected by way of two connecting lines with the two electrodes of the device connection and
- the two electrodes of the device connection are connected by way of two high-frequency lines with the neutral conductor and with the at least one phase conductor or with two phase conductors,
a low-pass filter that is optionally present being formed by one inductive resistor per connecting line and a high-pass filter that is optionally present being formed by one capacitor per high-frequency line,
the mains connection of the coupling device, for connection to a low-voltage electricity supply system, is formed with a neutral conductor and at least one phase conductor and
the two electrodes of the device connection of the coupling device are each connected to a pole of the bipolar signalling connection of the transmitting/receiving device.

16. Transmission arrangement according to any one of claims 11 to 15, **characterised in that**, for the connection of the coupling device to a low-voltage electricity supply system having a protective conductor, the mains connection and an additional device connection that is optionally present comprise a protective conductor, especially an earthed conductor.

## Revendications

1. Dispositif de couplage (1) avec un point de connexion au secteur (2) pour une connexion à un réseau d'alimentation électrique à basse tension et avec un point de connexion d'équipements (3) pour raccorder un équipement pour émettre et/ou pour recevoir un signal HF, **caractérisé en ce que** le dispositif de couplage (1) comprend un convertisseur de tension (5) pour convertir une basse tension se trouvant sur le point de connexion au secteur (2) en une très basse tension pouvant être fournie sur le point de connexion d'équipements (3) ainsi qu'un coupleur (6) pour un couplage à haute fréquence entre le point de connexion au secteur (2) et le point de connexion d'équipements (3).

2. Dispositif de couplage (1) selon la revendication 1, **caractérisé en ce que** le convertisseur de tension (5) est configuré de telle manière qu'il puisse convertir une basse tension alternative se trouvant sur le point de connexion au secteur (2) en une très basse tension continue pouvant être sortie sur le point de connexion d'équipements (3).

3. Dispositif de couplage (1) selon la revendication 1 ou 2, **caractérisé en ce qu'**entre le convertisseur de tension (5) et le point de connexion au secteur (2) et/ou entre le convertisseur de tension (5) et le point de connexion d'équipements (3) est prévu un filtre passe-bas (4.1, 4.2).

4. Dispositif de couplage (1) selon l'une quelconque des revendications 1 à 3, **caractérisé en ce que** le coupleur (6) comprend un filtre passe-haut (6.1, 6.2) se trouvant entre le point de connexion au secteur (2) et le point de connexion d'équipements (3), un signal HF reçu par l'intermédiaire du point de connexion d'équipements (3) pouvant être couplé sur le point de connexion au secteur (2) ou un signal HF reçu par l'intermédiaire du point de connexion au secteur (2) pouvant être couplé sur le point de connexion d'équipements (3).

5. Dispositif de couplage (1) selon l'une quelconque des revendications 1 à 4, **caractérisé en ce que** le point de connexion d'équipements (3) est configuré de façon à ce que la très basse tension permette d'alimenter en énergie électrique un équipement raccordé sur ce point de connexion d'équipements.

6. Dispositif de couplage (1) selon l'une quelconque des revendications 1 à 5, **caractérisé en ce qu'**il comprend au moins un point de connexion d'équipements supplémentaire (7) pour assurer une alimentation en énergie d'un équipement pouvant être utilisé avec de l'énergie électrique.

7. Dispositif de couplage (1) selon la revendication 6, **caractérisé en ce que**, pour alimenter un équipement qui y est raccordé, le point de connexion d'équipements supplémentaire (7) est relié par l'intermédiaire d'une liaison de réseau avec le point de connexion au secteur (2), la liaison de réseau passant par un filtre passe-bas (4.1) se trouvant éventuellement entre le point de connexion au secteur et le convertisseur de tension (5).

8. Dispositif de couplage (1) selon l'une quelconque des revendications 1 à 7, **caractérisé**
- **en ce que** le point de connexion d'équipements (3) comprend une électrode positive (3.1) et une électrode négative (3.2),
- **en ce que** le point de connexion au secteur (2) ainsi qu'un point de connexion d'équipements supplémentaire (7) existant éventuellement comprennent respectivement un conducteur de neutre (2.2) et au moins un conducteur de phase (2.1),
- **en ce qu'**une entrée du convertisseur de tension (5) est reliée par l'intermédiaire de deux lignes de liaison avec le conducteur de neutre et avec l'au moins un conducteur de phase ou avec deux conducteurs de phase,
- **en ce qu'**une sortie du convertisseur de tension est reliée par l'intermédiaire de deux lignes de liaison avec les deux électrodes du point de connexion d'équipements et
- **en ce que** les deux électrodes du point de connexion d'équipements sont reliées par l'intermédiaire de deux lignes à haute fréquence avec le conducteur de neutre et avec l'au moins un conducteur de phase ou avec deux conducteurs de phases,
un filtre passe-bas (4.1, 4.2) existant éventuellement étant formé par respectivement une inductance pour chaque ligne de liaison et un filtre passe-haut (6.1, 6.2) existant éventuellement étant formé par respectivement une capacité pour chaque ligne à haute fréquence.

9. Dispositif de couplage (1) selon l'une quelconque des revendications 1 à 8, **caractérisé en ce que** le point de connexion au secteur (2) et un point de connexion d'équipements supplémentaire (7) existant éventuellement comprennent un conducteur de protection (2.3), en particulier un conducteur de terre.

10. Dispositif de couplage (1) selon l'une quelconque des revendications 1 à 9, **caractérisé en ce qu'**il est placé dans un boîtier non déformable, **en ce que** le point de connexion au secteur (2) est réalisé comme prise de secteur, **en ce que** le point de connexion d'équipements (3) est réalisé comme câble d'alimentation et de signaux sortant du boîtier et **en ce qu'**un point de connexion d'équipements supplémentaire (7) existant éventuellement est réalisé comme prise de courant, le boîtier étant réalisé de telle manière que le dispositif de couplage puisse être raccordé avec son point de connexion au secteur à un réseau d'alimentation électrique à basse tension, qu'un équipement à alimenter avec la très basse tension puisse être raccordé avec le point de connexion d'équipements et qu'un équipement à alimenter avec la tension du secteur puisse être raccordé avec le point de connexion d'équipements supplémentaire existant éventuellement.

11. Ensemble de transmission pour l'émission ou la réception d'un signal HF par l'intermédiaire d'un réseau d'alimentation électrique à basse tension (18) comprenant une unité d'émission et de réception (19.1) et un dispositif de couplage (1.1), **caractérisé**
- **en ce que** le dispositif de couplage (1.1) comprend un point de connexion au secteur (2) pour la connexion au réseau d'alimentation électrique à basse tension (18) et un point de connexion d'équipements (3) pour le branchement de l'unité d'émission et de réception (19.1),
- **en ce que** le dispositif de couplage (1.1) comprend un convertisseur de tension pour convertir une basse tension se trouvant sur le point de connexion au secteur (2) en une très basse tension pouvant être fournie sur le point de connexion d'équipements (3) ainsi qu'un coupleur (6) pour un couplage à haute fréquence entre le point de connexion au secteur (2) et le point de connexion d'équipements et
- **en ce que** le dispositif de couplage (1.1) est, par l'intermédiaire de son point de connexion au secteur, raccordé de telle manière au réseau d'alimentation électrique à basse tension (18) et que l'unité d'émission et de réception (19.1) est, par l'intermédiaire du point de connexion d'équipements (3) du dispositif de couplage (1.1), raccordé de telle manière à celui-ci que l'unité d'émission et de réception (19.1) puisse être alimentée en énergie électrique par l'intermédiaire du point de connexion d'équipements (3) du dispositif de couplage (1.1) ainsi qu'un signal HF produit par l'unité d'émission et de réception (19.1) puisse être transmis au dispositif de couplage (1.1) et puisse être injecté à partir de celui-ci dans le réseau d'alimentation électrique à basse tension (18) ou qu'un signal HF transmis par le réseau d'alimentation électrique à basse tension (18) puisse être découplé par le dispositif de couplage (1.1) du réseau d'alimentation électrique à basse tension (18) et puisse être transmis à l'unité d'émission et de réception (19.1).

12. Ensemble de transmission selon la revendication 11, **caractérisé en ce que** le dispositif de couplage comprend un filtre passe-bas entre le convertisseur de tension (5) et le point de connexion au secteur et/ou entre le convertisseur de tension et le point de connexion d'équipements.

13. Ensemble de transmission selon la revendication 11 ou 12, **caractérisé en ce que** le dispositif de couplage comprend un filtre passe-haut se trouvant entre le point de connexion au secteur et le point de connexion d'équipements, un signal HF reçu par l'unité d'émission et de réception pouvant être injecté dans le réseau d'alimentation électrique à basse tension ou un signal HF transmis par le réseau d'alimentation électrique à basse tension pouvant être découplé du réseau d'alimentation électrique à basse tension et être retransmis à l'unité d'émission et de réception.

14. Ensemble de transmission selon l'une quelconque des revendications 11 à 13, **caractérisé en ce que** le dispositif de couplage comprend un point de connexion d'équipements supplémentaire (7) pour assurer une alimentation en énergie d'un équipement pouvant être utilisé avec de l'énergie électrique.

15. Ensemble de transmission selon l'une quelconque des revendications 11 à 14, **caractérisé**
- **en ce que** l'unité d'émission et de réception comprend un raccord d'alimentation et de signaux bipolaire par l'intermédiaire duquel elle peut être alimentée en énergie électrique et en même temps émettre ou recevoir le signal HF,
- **en ce que** le point de connexion d'équipements du dispositif de couplage comprend une électrode positive et une électrode négative,
- **en ce que** son point de connexion au secteur ainsi qu'un point de connexion d'équipements supplémentaire existant éventuellement comprennent respectivement un conducteur de neutre et au moins un conducteur de phase,
- **en ce qu'**une entrée du convertisseur de tension est reliée par l'intermédiaire de deux lignes de liaison avec le conducteur de neutre et avec l'au moins un conducteur de phase ou avec deux conducteurs de phase,
- **en ce qu'**une sortie du convertisseur de tension est relié par l'intermédiaire de deux lignes de liaison avec les deux électrodes du point de connexion d'équipements et
- **en ce que** les deux électrodes du point de connexion d'équipements sont reliées par l'intermédiaire de deux lignes à haute fréquence avec le conducteur de neutre et avec l'au moins un conducteur de phase ou avec deux conducteurs de phases,
un filtre passe-bas existant éventuellement étant formé par respectivement une inductance pour chaque ligne de liaison et un filtre passe-haut existant éventuellement étant formé par respectivement une capacité pour chaque ligne à haute fréquence,
le point de connexion au secteur du dispositif de couplage étant, pour la connexion à un réseau d'alimentation électrique à basse tension, configuré avec un conducteur de neutre et avec au moins un conducteur de phase et
les deux électrodes du point de connexion d'équipements du dispositif de couplage étant reliées avec respectivement un pôle du raccord de signaux bipolaire de l'unité d'émission et de réception.

16. Ensemble de transmission selon l'une quelconque des revendications 11 à 15, **caractérisé en ce que**, pour la connexion du dispositif de couplage à un réseau d'alimentation électrique à basse tension comprenant un conducteur de protection, le point de connexion au secteur ainsi qu'un point de connexion d'équipements supplémentaire existant éventuellement comprennent un conducteur de protection, en particulier un conducteur de terre.
